# EUROPÄISCHE PATENTSCHRIFT

(11) **EP 3 310 522 B1**
(45) Veröffentlichungstag und Bekanntmachung des Hinweises auf die Patenterteilung: **22.02.2023**
(21) Anmeldenummer: 16730820.4
(22) Anmeldetag: 17.06.2016
(51) Int. Cl.: B23K 26/08, B23K 37/04, B23K 26/70, B26D 7/20, B23K 26/38, B23Q 1/03

(54) **MASCHINE ZUR TRENNENDEN BEARBEITUNG VON PLATTENFÖRMIGEN MATERIALIEN UND ÜBERDECKUNGSELEMENT FÜR EINE SOLCHE MASCHINE**
MACHINE FOR THE SEPARATIVE MACHINING OF PLATE-SHAPED MATERIALS AND COVERING ELEMENT FOR SUCH A MASCHINE
MACHINE POUR L'USINAGE PAR DÉCOUPAGE DE MATÉRIAUX EN FORME DE PLAQUES ET ÉLÉMENT DE COUVERTURE POUR CETTE MACHINE

(30) Priorität: 18.06.2015 DE 102015109740
(43) Veröffentlichungstag der Anmeldung: 25.04.2018
(73) Patentinhaber: Trumpf Werkzeugmaschinen GmbH + Co. KG, 71254 Ditzingen (DE)
(72) Erfinder: DEISS, Magnus, 70372 Stuttgart (DE)
(74) Vertreter: Trumpf Patentabteilung
(86) Internationale Anmeldenummer: PCT/EP2016/064018
(87) Internationale Veröffentlichungsnummer: WO 2016/202987

(56) Entgegenhaltungen:
- DE-A1- 2 825 090
- DE-A1-102011 051 170
- DE-U1- 20 112 006

## Beschreibung

Die Erfindung betrifft eine Maschine zum trennenden Bearbeiten eines plattenförmigen Werkstücks mit zwei Werkstückauflageflächen zur Auflage des Werkstücks, zwischen denen ein Spalt gebildet ist, und mit mindestens einem im oder entlang des Spalts verfahrbaren Schlitten, der mit mindestens einem Überdeckungselement verbunden ist, das den Spalt zumindest teilweise abdeckt und ein Überdeckungselement für eine Maschine.

Eine solche Maschine zum trennenden Bearbeiten von plattenförmigen Werkstücken und ein Überdeckungselement sind aus der DE 10 2011 051 170 A1 bekannt geworden.

Bei einer solchen Bearbeitungsmaschine kann das Werkzeug zur trennenden Bearbeitung, beispielsweise ein Laserbearbeitungskopf oder ein Stanzwerkzeug, innerhalb oder oberhalb des Spalts verfahrbar angeordnet sein. Die Maschine kann insbesondere eine erste Bewegungseinrichtung zum Bewegen des Werkstücks in einer ersten Richtung und eine zweite Bewegungseinrichtung zum Bewegen des Werkzeugs in einer zweiten Richtung aufweisen. Diese Maschine weist zwei Werkstückauflageflächen zur Auflage eines Werkstücks auf, zwischen denen ein Spalt gebildet ist. Im oder entlang des Spaltes ist zumindest ein verfahrbarer Schlitten vorgesehen, der wenigstens mit einem Überdeckungselement verbunden ist, das den Spalt zumindest teilweise während der Bearbeitung des Werkstücks abdeckt.

Ein analoger Aufbau einer solchen Maschine ist aus der US 4,993,296 A bekannt.

Der Erfindung liegt die Aufgabe zugrunde, eine Maschine zur trennenden Bearbeitung von Werkstücken und ein Überdeckungselement bereitzustellen, die eine verbesserte Unterstützung von Werkstückteilen während der trennenden Bearbeitung ermöglicht.

Diese Aufgabe wird durch eine Maschine der eingangs genannten Art gelöst, bei der das Überdeckungselement eine Kette mit mehreren Kettengliedern umfasst, welche auf einer Oberseite eine Bürstenauflage aufweisen, wobei zumindest zwei zueinander beabstandete Kettenglieder einen Schwenkbegrenzungswinkel gegenüber der Längsachse der Kettenglieder aufweisen, so dass die Kettenglieder bei einer geradlinigen Ausrichtung zueinander ohne Kraftbeaufschlagung einen nichtebenen Verlauf einnehmen. Auf diese Weise nimmt die Kette im unbeaufschlagten Zustand, also ohne Krafteinwirkung auf die Kettenglieder, einen leicht gegenüber einer Ebene nach oben gewölbten Verlauf ein. Sobald nun die Kettenglieder aufgrund eines aufliegenden Werkstücks oder einer Führung in die Ebene, beispielsweise der Werkstückauflagefläche, übergeführt werden, wirkt auf die zumindest zwei zueinander benachbarten Kettenglieder eine Vorspannung beziehungsweise eine Kraft entgegen der Schwerkraftrichtung. Dadurch kann in einfacher Weise verhindert werden, dass die in dem Spalt zwischen den Werkstückauflageflächen angeordneten Überdeckungselemente durchhängen. Vielmehr unterstützen diese in Analogie zu den Werkstückauflageflächen das darauf aufliegende Werkstück, so dass eine quasi vollständig geschlossene Werkstückauflagefläche gebildet werden kann. Zudem wird dadurch auch eine Verkippung oder Verkantung von Werkstückteilen, welche zumindest teilweise bereits geschnitten sind, vermieden. Während der trennenden Bearbeitung kann auf diese Weise das Werkstück auch entlang einer Richtung quer zum Spalt prozesssicher zur Bearbeitung verfahren werden.

Eine bevorzugte Ausgestaltung des Überdeckungselementes für die Maschine zur trennenden Bearbeitung sieht vor, dass die Kettenglieder der Kette einen konvexen Verlauf, insbesondere bei einer horizontalen Ausrichtung gegenüber der Schwerkraftrichtung einnehmen. Dadurch wird ermöglicht, dass insbesondere in einem mittleren Bereich des den Spalt schließenden Überdeckungselementes eine erhöhte Vorspannkraft erzielt wird, um zumindest der in diesem Bereich wirkenden Schwerkraft des Überdeckungselementes, in welchem dieses im Spalt nicht unterstützt ist, entgegenzuwirken.

Der Schwenkbegrenzungswinkel umfasst gemäß einer ersten Ausführungsform zwischen zwei zueinander beabstandeten Kettengliedern gegenüber der Längsachse der Kettenglieder wenigstens 1 °. Dies bedeutet, dass die Kettenglieder bei einer im Wesentlichen horizontalen Ausrichtung der Kette einen leicht bauchigen Verlauf aufgrund des Schwenkbegrenzungswinkels einnehmen.

Die Kettenglieder der Kette weisen gemäß einer zweiten Ausführungsform einen Schwenkwinkel von 1° bis 60° zueinander auf und der Schwenkwinkel grenzt unmittelbar an den Schwenkbegrenzungswinkel an und liegt der Längsachse gegenüber. Dadurch ist ein konstruktiv einfacher Aufbau gegeben, so dass bei einer Abwickelbewegung einer aufgerollten Kette zum Einführen in den Spalt unmittelbar der Schwenkbegrenzungswinkel wirken kann.

Vorzugsweise ist der im Spalt angeordnete Schlitten, der mit dem Überdeckungselement verbunden ist und durch den das Überdeckungselement im Spalt bewegt werden kann, als Unterstützungsschlitten ausgebildet und weist eine Auflagefläche zur Unterstützung vom beim trennenden Bearbeiten geschnittenen Werkstückteilen auf. Sofern die Unterstützungsschlitten länger ausgebildet sind, kann auf diese Weise die freie Länge des Spalts, die durch die Kette überdeckt werden muss, kurz gehalten werden. Bei der Verwendung einer möglichst kurzen Kette werden Probleme, die sich aus einem Durchhängen der Kette ergeben könnten, vermieden.

Alternativ kann der Schlitten, der mit dem Überdeckungselement verbunden ist und zu dessen Verfahrbewegung dient, ohne Auflagefläche ausgebildet und beispielsweise unter dem Überdeckungselement oder neben dem Überdeckungselement benachbart zum Spalt angeordnet sein.

Eine bevorzugte Ausführungsform des Überdeckungselementes sieht vor, dass die Bürstenauflage auf dem Kettenglied durch eine mit Bürsten bestückte Platte ausgebildet ist. Dadurch kann eine einfache und schnelle Anpassung der aus mehreren Kettengliedern bestehenden Kette an die jeweilige Werkstückauflagefläche geschaffen werden, indem die für die Werkstückauflageflächen vorgesehenen Materialien auch für die Bürstenauflage der Kettenglieder eingesetzt werden.

Bevorzugt ist in dem Spalt oder benachbart zum Spalt der Maschine eine Führung vorgesehen, durch welche die Kettenglieder geführt und die Bürstenauflage auf der Oberseite der Kettenglieder im Spalt jeweils bündig zu den Werkstückauflageflächen ausgerichtet sind. Die Führung kann in der Höhe - also in Z-Richtung - innerhalb des Spaltes oder benachbart zum Spalt derart ausgerichtet werden, dass die Bürstenenden der Bürstenauflage an den Kettengliedern bündig zu den Werkstückauflageflächen ausgerichtet sind, so dass eine geschlossene Werkstückauflage gebildet wird.

Bevorzugt ist die Führung der Maschine im Spalt zumindest als eine Schiene ausgebildet, welche als Niederhalter für die Kettenglieder im Spalt angeordnet ist und an welche die Kettenglieder während der Verfahrbewegung des Überdeckungselementes anliegen. Durch diesen Niederhalter werden die einzelnen Kettenglieder, welche aufgrund des vorbestimmten Schwenkwinkels einen leicht in Z-Richtung weisenden bauchigen Verlauf gegenüber der Horizontalen einnehmen, niedergehalten, so dass alle Kettenglieder mit einer geringen Vorspannung an dem Niederhalter als Gegenlager anliegen und dadurch auch eine Auflagekraft aufnehmen können, welche durch das Werkstück auf das Überdeckungselement wirkt.

Damit ein geschlossener Spalt zwischen dem Überdeckungselement und der benachbarten Werkstückauflagefläche geschaffen werden kann, wenn die Schiene im Spalt angeordnet ist, ist bevorzugt auf der Oberseite der Schiene eine Bürstenauflage vorgesehen. Dadurch kann dieser Bereich zwischen der Werkstückauflagefläche und der benachbart dazu verfahrenden Bürstenauflage des Überdeckungselementes geschlossen werden.

Eine bevorzugte Ausführungsform der Führung im oder benachbart zum Spalt der Maschine sieht vor, dass diese als L-förmige Schiene ausgebildet ist. Dadurch kann der waagerechte (kurze) Schenkel als Niederhalter ausgebildet sein. Der (lange) Schenkel, der in Z-Richtung ausgerichtet ist, kann eine seitliche Führung für das hin und her verfahrbare Überdeckungselement im Spalt bilden. Auf diese Weise kann eine einseitige Führung der Kette für eine kontrollierte Verfahrbewegung des Überdeckungselementes im Spalt genügen.

Eine weitere vorteilhafte Ausgestaltung der Führung sieht vor, dass sich diese Führung entlang des zwischen den Werkstückauflageflächen gebildeten Spaltes erstreckt. Bevorzugt ist jeweils am Eingang des Spaltes ein Stützpunkt für die in den Spalt einlaufenden Kettenglieder vorgesehen, der die Kette zur Führung positioniert. Dadurch wird ein gesichertes Verfahren der zumindest einen Kette beim Hineinführen und Hinausführen in und aus dem Spalt ermöglicht.

Des Weiteren ist bevorzugt an der Oberseite der Kettenglieder entlang einer Seitenkante längs der Kette ein Führungsabschnitt ohne Bürstenauflage ausgebildet, welcher an der Führung anliegt. Dadurch kann die Kette unmittelbar durch die Führung, d.h. beispielsweise durch die als Niederhalter ausgebildete Schiene geführt werden, ohne dass weitere aufwändige Maßnahmen oder zusätzliche Anbauteile an den Kettengliedern erforderlich sind.

Eine weitere vorteilhafte Ausgestaltung der Maschine sieht vor, dass ein Ende des als Kette ausgebildeten Überdeckungselementes an dem im Spalt verfahrbaren Schlitten befestigt ist und das andere Ende der Kette an einer Wickelwelle vorgesehen oder in einer Führung aufrollbar angeordnet ist. Dadurch kann eine platzsparende Aufnahme des Überdeckungselementes geschaffen werden.

Das Überdeckungselement ist gemäß einer bevorzugten Ausführungsform als eine Energieführungskette ausgebildet, welche vorzugsweise einen Aufnahmeraum zur Aufnahme wenigstens einer Versorgungsleitung umfasst. Dies ermöglicht einen kostengünstigen Aufbau. Außerdem ist ein als Energieführungskette ausgebildetes Überdeckungselement zusätzlich für die Führung von Leitungen oder Kabeln nutzbar. Ein Gehäusedeckel eines Kettengliedes der Energieführungskette ist dabei als Bürstenauflage ausgebildet oder nimmt eine Bürstenauflage auf. Zudem kann durch einen einfachen Austausch der übliche Gehäusedeckel der Kettenglieder einer Energieführungskette durch eine Bürstenauflage ersetzt werden.

Die der Erfindung zugrunde liegende Aufgabe wird des Weiteren durch ein Überdeckungselement für eine Maschine der vorgenannten Art gelöst, welches aus einer Kette mit mehreren Kettengliedern besteht, welche auf einer Oberseite eine Bürstenauflage aufweisen, die bevorzugt durch eine mit Bürsten bestückte Platte gebildet ist, wobei zumindest zwei zueinander benachbarte Kettenglieder einen Schwenkbegrenzungswinkel gegenüber der Längsachse der Kettenglieder aufweisen, so dass die Kettenglieder bei einer geradlinigen Ausrichtung zueinander ohne Kraftbeaufschlagung einen nichtebenen Verlauf einnehmen. Zudem kann durch diesen Schwenkbegrenzungswinkel bei einer Anordnung der einzelnen Kettenglieder in einer Ebene eine Vorspannung zwischen den einzelnen Kettengliedern erzeugt werden. Bei einer Ausrichtung der Kettenglieder in einer horizontalen Ebene weist die Vorspannung zwischen den Kettengliedern eine Kraftwirkung entgegen der Schwerkraftrichtung auf, so dass bei einem Aufliegen eines Werkstücks eine Unterstützungskraft wirkt, um das Werkstück auch im Spalt in den Werkstückauflageflächen abzustützen.

Die Überdeckungselemente können bei einer geradlinigen Ausrichtung zueinander einen konvexen Verlauf, insbesondere bei einer horizontalen Ausrichtung der Kette einen entgegen der Schwerkraftrichtung gebogenen Verlauf, einnehmen. Dadurch kann beispielsweise zwischen zwei Stützpunkten, an denen sich bei einer horizontalen Ausrichtung der Überdeckungselemente die jeweiligen Kettenglieder abstützen, ein entgegen der Schwerkraftrichtung, also vertikal nach oben gerichteter konvexer Verlauf der Kette einstellen, so dass beim Überführen des Überdeckungselementes in eine horizontale Ebene eine Vorspannkraft zwischen den einzelnen Kettengliedern aufgebaut wird, die als Unterstützungskraft einem auf den Überdeckungselementen aufliegenden Werkstück entgegen wirkt.

Ein solcher Schwenkbegrenzungswinkel zwischen zwei Kettengliedern umfasst wenigstens 1°
und/oder die Kettenglieder des Überdeckungselementes weisen einen Schwenkwinkel von 1° bis 60° auf, der sich ausgehend von der Längsachse des Kettengliedes unmittelbar an den Schwenkbegrenzungswinkel anschließt. Dadurch ist eine einfache konstruktive Lösung geschaffen, bei welcher zum einen ein Aufwickeln oder Aufrollen der Kette ermöglicht ist und zum anderen bei Einführen der Kette beispielsweise in einen Spalt zwischen zwei Werkstückauflageflächen eine selbständige Ausrichtung der Kettenglieder zueinander erfolgen kann.

Diese Überdeckungselemente sind insbesondere für eine teilweise oder vollständige Spaltabdeckung für die Maschine der vorgenannten Art vorgesehen. Ein solches mit Bürsten versehenes Überdeckungselement kann als Spaltabdeckung für eine Maschine zum trennenden Bearbeiten von Werkstücken mit zwei Werkstückauflageflächen dienen, zwischen denen ein Spalt gebildet ist, damit während dem Bearbeiten des Werkstücks dieses möglichst großflächig unterstützt werden kann.

Bevorzugt weist das Überdeckungselement an der Oberseite der Kettenglieder entlang einer Seitenkante längs der Kette einen Führungsabschnitt ohne Bürstenauflage auf. Dadurch kann durch Niederhalten der Kette eine einfache Führung ermöglicht werden.

Des Weiteren sind die Kettenglieder und die gelenkige Verbindung zwischen den Kettengliedern bevorzugt torsionssteif ausgebildet. Dies ermöglicht eine einseitige Führung des Überdeckungselementes im Spalt: So genügt beispielsweise eine einseitig an der Oberseite der Kettenglieder gebildete Anlagefläche oder ein Führungsabschnitt zum Anliegen an einer insbesondere als Niederhalter ausgebildeten Führung, um ein solches Überdeckungselement auch über eine größere Spaltlänge freitragend in dem Spalt anzuordnen.

Eine weitere vorteilhafte Ausführungsform des Überdeckungselementes sieht vor, dass das Überdeckungselement als eine Energieführungskette mit einer Stützummantelung ausgebildet ist, in deren Innenraum ein Führungskanal vorgesehen ist, der vorzugsweise zur Aufnahme von mindestens einer Leitung dient, wobei die Gehäusedeckel der Kettenglieder der Stützummantelung als Bürstenauflage ausgebildet sind oder eine Bürstenauflage aufnehmen. Dadurch kann auf standardisierte Kettenglieder zurückgegriffen werden, welche hinsichtlich des Gehäusedeckels angepasst werden, so dass die Bürstenauflagen mit den Werkstückauflageflächen der Maschine zum trennenden Bearbeiten korrespondieren, für welche der Einsatz des Überdeckungselementes vorgesehen ist.

Bei dem Überdeckungselement ist vorzugsweise die Bürstenauflage aus einzelnen Bürstenbündeln gebildet, wobei insbesondere der Abstand der einzelnen Bürstenbündel zueinander nicht größer ist als 40 mm. Dadurch kann eine hinreichende Unterstützung im Spalt geschaffen werden, um auch kleine bereits geschnittene oder teilweise geschnittene Werkstückteile, welche beispielsweise im Restgitter verbleiben, verkippungsfrei aufzunehmen.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
Figur 1 eine perspektivische Ansicht einer Maschine zum trennenden Bearbeiten mit zumindest einem in einem Spalt zwischen zwei Werkstückauflagen angeordneten Überdeckungselement,
Figur 2 eine schematisch vergrößerte Detailansicht des Überdeckungselementes im Spalt der Maschine gemäß der Schnittlinie II-II in Figur 1,
Figur 3 eine perspektivische Ansicht eines an einem Unterstützungsschlitten angeordneten Überdeckungselementes mit einer Führung im Spalt gemäß der Maschine in Figur 1,
Figur 4 eine perspektivische Ansicht eines Kettengliedes des in Figur 1 dargestellten Überdeckungselementes,
Figur 5 eine schematische Seitenansicht von zwei benachbarten Kettenglieder und

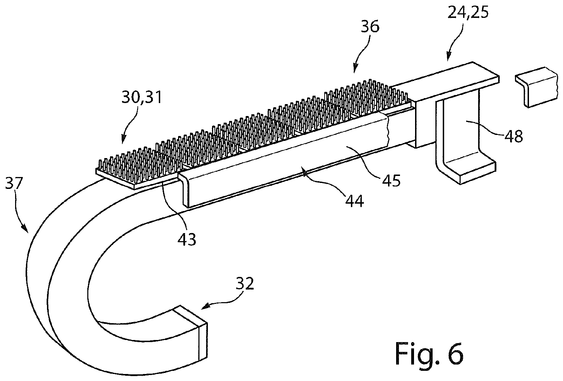

Figur 6 eine perspektivische Ansicht des Überdeckungselementes mit einer Führung im Spalt und einer alternativen Anbindung eines festen Endes des Überdeckungselementes.

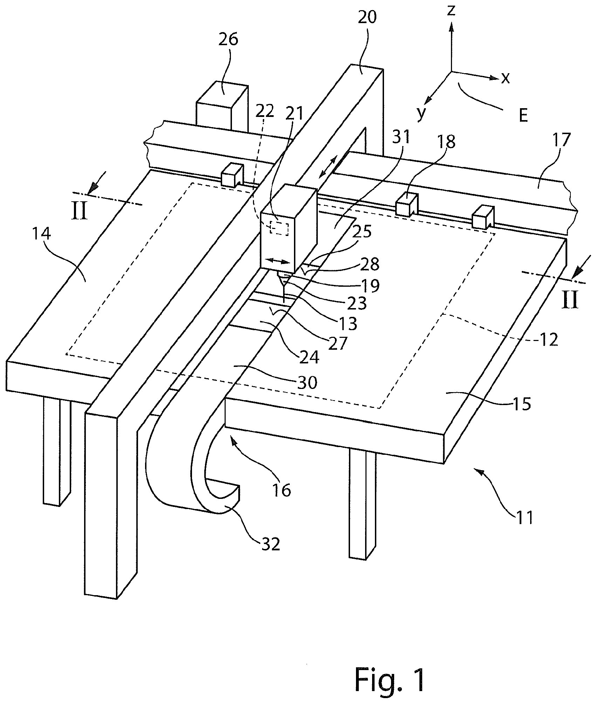

In Figur 1 ist beispielhaft eine Maschine 11 zum trennenden Bearbeiten eines gestrichelt dargestellten plattenförmigen Werkstücks 12 mit einem Bearbeitungswerkzeug dargestellt, wobei in diesem Beispiel die trennende Bearbeitung mittels eines Schneidstrahls 13 als Bearbeitungswerkzeug erfolgt. Die Maschine 11 kann als eine Laserbearbeitungsmaschine zum Laserschneiden von Werkstücken 12 mit einem Laserstrahl ausgebildet sein. Zur schneidenden Bearbeitung des Werkstücks 12 kann der Schneidstrahl 13 auch ein Plasmastrahl oder ein Wasserstrahl sein. Alternativ kann die trennende Bearbeitung mit dem Bearbeitungswerkzeug beispielsweise in Form von Stanzwerkzeugen erfolgen. Das Werkstück 12 liegt bei der Bearbeitung auf zwei Werkstückauflageflächen 14, 15 auf, die im gezeigten Beispiel die Oberseiten von zwei Werkstücktischen bilden und eine Auflageebene E (X-Y-Ebene eines XYZ-Koordinatensystems) zur Auflage des Werkstücks 12 definieren. Die Werkstückauflageflächen 14, 15 können durch Tischflächen oder durch stiftförmige Auflageelemente, durch Auflagebänder, Rollen, Kugeln, Luftpolster oder insbesondere durch Bürsten gebildet werden. Mittels einer Bewegungs- und Handhabungseinrichtung 17, welche einen Antrieb sowie eine Klemmeinrichtung 18 in Form von Spannpratzen zum Festhalten des Werkstücks 12 aufweisen, kann das Werkstück 12 auf den Werkstückauflageflächen 14, 15 in einer ersten Bewegungsrichtung X gesteuert verschoben und an eine vorgegebene Werkstückposition bewegt werden. Auch ist beispielsweise möglich, dass zur Bewegung oder zur Unterstützung der Bewegung des Werkstücks 12 in X-Richtung die Werkstückauflageflächen 14, 15 selbst als Bewegungseinrichtung ausgestaltet sind, wie beispielsweise in Form eines oder mehrerer umlaufender Förderbänder, wie dies in der DE 10 2011 051 170 A1 der Anmelderin oder in der JP 06170469 beschrieben ist.

Zwischen den beiden Werkstückauflageflächen 14, 15 ist ein Spalt 16 gebildet, der sich in einer zweiten Richtung (Y-Richtung) über den gesamten Verfahrweg eines Schneidkopfes 19 erstreckt, der den Schneidstrahl 13 auf das Werkstück 12 ausrichtet und fokussiert. Der Schneidkopf 19 ist mittels eines als Bewegungseinrichtung dienenden angetriebenen Schlittens 21, der an einem feststehenden Portal 20 geführt ist, oberhalb des Spaltes 16 in Y-Richtung gesteuert verfahrbar. Der Schneidkopf 19 ist im gezeigten Beispiel innerhalb des Spaltes 16 zusätzlich auch in X-Richtung gesteuert verfahrbar und kann mit Hilfe eines an dem Schlitten 21 angebrachten zusätzlichen Bewegungseinrichtung 22, beispielsweise in Form eines Linearantriebes, in X-Richtung gesteuert verfahren werden. Die maximale Verfahrbewegung des Schneidkopfes 19 in X-Richtung ist im gezeigten Beispiel geringer als die Breite des Spaltes 16. Mit Hilfe der aufeinander aufbauenden Bewegungseinrichtungen 21, 22 kann der Schneidkopf 19 sowohl in X-Richtung als auch in Y-Richtung an einer gewünschten Schneidposition innerhalb des Spaltes positioniert werden. Gegebenenfalls kann der Schneidkopf 19 auch entlang einer dritten Bewegungsrichtung (Z-Richtung) verschoben werden, um den Abstand zwischen der Bearbeitungsdüse 23 des Schneidkopfs 19 und der Werkstückoberfläche einzustellen.

Innerhalb des Spaltes 16 sind zwei Unterstützungsschlitten 24, 25 angeordnet, die sich jeweils über die Breite des Spaltes 16 erstrecken und in dem Spalt in Y-Richtung gesteuert sowie unabhängig voneinander verfahrbar sind. Die gesteuerte Bewegung der Unterstützungsschlitten 23, 24 im Spalt 16 kann beispielsweise mit Hilfe von Antrieben erfolgen, die an dem jeweiligen Unterstützungsschlitten 23, 24 angebracht sind. Beispielsweise können Spindelantriebe vorgesehen sein.

Zur Steuerung der schneidenden Bearbeitung weist die Maschine 11 eine Steuerungseinrichtung 26 auf, die zur Koordination der Bewegungen des Werkstücks 12, des Schneidkopfs 19 sowie der Unterstützungsschlitten 24, 25 dient, um eine gewünschte Werkstückposition und eine gewünschte Schneidkopfposition sowie eine gewünschte Position der Unterstützungsschlitten 23, 24 einzustellen, um das Schneiden einer vorgegebenen Schnittkontur zu ermöglichen und das Werkstück 12 im Bereich des Spaltes 16 zu unterstützen.

Die Unterstützungsschlitten 23, 24 weisen Auflageflächen 27, 28 auf, auf welchen das zu bearbeitende Werkstück 12 während der Bearbeitung mittels des Schneidstrahls 13 aufliegt. An aneinander abgewandten Außenkanten der Auflageflächen 27, 28 der Unterstützungsschlitten 24, 25, die in X-Richtung verlaufen, ist jeweils ein Ende von zumindest einem Überdeckungselement 30, 31 zur Abdeckung des Spaltes 16 angebracht. Bevorzugt ist jeweils ein Überdeckungselement 30, 31 an jeweils einem Unterstützungsschlitten 23, 24 angeordnet. Zwischen den Unterstützungsschlitten 24, 25 ist der eigentliche Schneidbereich gebildet, in dem noch ein oder mehrere weitere Unterstützungsschlitten angeordnet sein können. Die zusätzlichen Unterstützungsschlitten können eine anders gestaltete, beispielsweise metallische und glatte Oberfläche aufweisen und mit den Schlitten 24, 25 gekoppelt verfahrbar sein.

Alternativ kann auch nur ein Unterstützungsschlitten 24 im Spalt 16 vorgesehen sein, an dem ein oder zwei Überdeckungselemente 30, 31 angreifen. In einer weiteren Variante können der oder die Schlitten 23, 24, die mit den Überdeckungselementen 30, 31 verbunden sind und zu deren Verfahrbewegung dienen, ohne Auflageflächen 27, 28 ausgebildet und beispielsweise unter den Überdeckungselementen 30, 31 angeordnet sein.

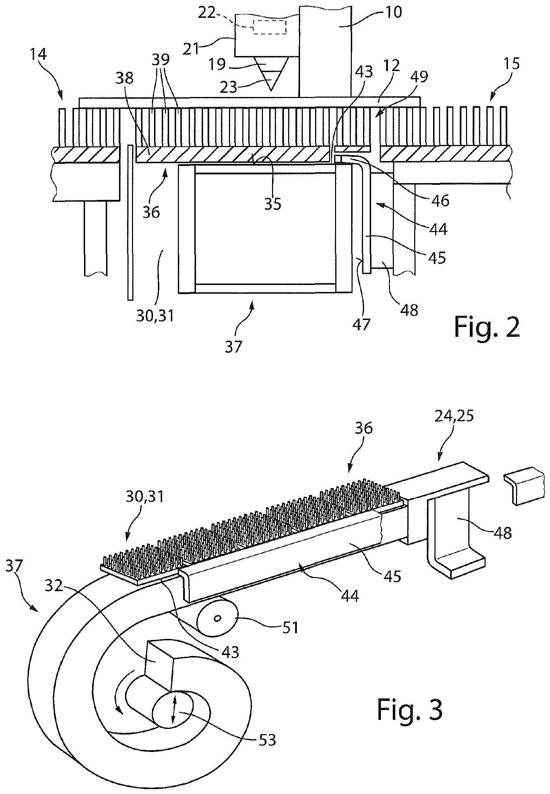

In Figur 2 ist eine schematische Schnittansicht entlang der Linie II-II in Figur 1 dargestellt. Dabei sind der Spalt 16 sowie die an den Spalt 16 angrenzenden Werkstückauflageflächen 14, 15 als auch die Bewegungseinrichtung 21, 22 vergrößert dargestellt. Die weiteren Komponenten wurden zur Wahrung der Übersichtlichkeit nicht dargestellt.

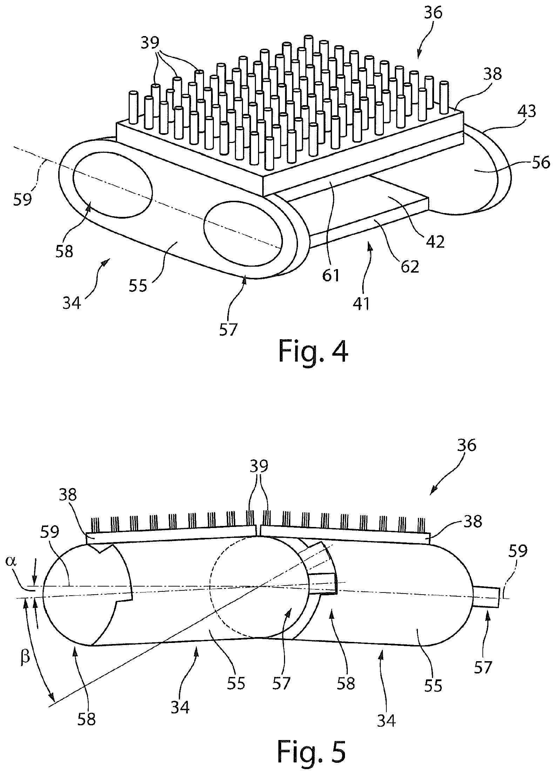

In dem Spalt 16 zwischen den beiden Werkstückauflageflächen 14, 15 ist das Überdeckungselement 30 bzw. 31 angeordnet, welches als eine Kette 37 ausgebildet ist und mehrere Kettenglieder 34 aufweist (Figur 4). Auf einer Oberseite 35 der jeweiligen Kettenglieder 34 ist eine Bürstenauflage 36 vorgesehen. Diese Bürstenauflage 36 kann aus einer Platte 38 bestehen, an der mehrere Bürstenbündel 39 verteilt vorgesehen sind, wobei die Bürstenlänge der Bürstenbündel 39 derart gewählt ist, dass diese beim Positionieren des Überdeckungselementes 30, 31 im Spalt 16 bündig mit den benachbarten Bürsten der Werkstückauflageflächen 14, 15 liegen, um eine ebene Auflage für das oder die Werkstücke 12 zu bilden.

Seitlich an der Oberseite 35 des Kettengliedes 34 (oder alternativ an der Oberfläche der Platte 38) bleibt ein Führungsabschnitt 43 frei, so dass eine Führung 44 an der Oberseite 35 der Kettenglieder 34 bzw. der Platten 38 angreifen kann, um die Kettenglieder in dem Spalt 16 zu führen. Diese Führung 44 ist als Schiene 45 ausgebildet und mittels einer Halterung 48 beispielsweise an einer Unterseite der Werkstückauflagefläche 14, 15 oder an einem nicht näher dargestellten Maschinentisch befestigt. Die Schiene 45 umfasst zumindest einen Niederhalter 46, an welchem die Oberseite 35 der Kettenglieder 34 bzw. die Platten 38 von unten anliegen. Bevorzugt ist die Schiene 45 L-förmig ausgebildet, wobei ein kurzer Schenkel der L-förmigen Schiene den Niederhalter 46 bildet und ein langer Schenkel, welcher vertikal ausgerichtet ist, eine seitliche Führung 47 für die Kettenglieder 34 bildet. Auf dem Niederhalter 46 ist des Weiteren eine Bürstenauflage 49 vorgesehen, um einen zwischen der Werkstückauflagefläche 15 und der Bürstenauflage 36 an den Kettengliedern 34 gebildeten Zwischenraum zu schließen. Der Aufbau dieser Bürstenauflage 49 entspricht vorteilhafterweise jenen auf den Kettengliedern 34.

In Figur 3 ist eine perspektivische Ansicht des Überdeckungselementes 30, 31 ohne dazu benachbarte Werkstückauflageflächen 14, 15 dargestellt. Entlang dem sich in Y-Richtung erstreckenden Spalt 16 zwischen den Werkstückauflageflächen 14, 15 erstreckt sich die Führung 44, so dass unabhängig von der Position der Unterstützungsschlitten 24, 25 und demzufolge der Überdeckungselemente 30, 31 eine Führung und Ausrichtung der Überdeckungselemente 30, 31 im Spalt 16 gegeben ist. Die zueinander benachbarten Kettenglieder 34 sind in eine Richtung schwenkbar gelenkig zueinander verbunden, so dass ein Abrollen und eine Umlenkung ermöglicht sind. Beim Überführen der Kettenglieder 34 in eine Ebene, die bevorzugt parallel zur Ebene der Werkstückauflagefläche 14, 15 ist, wird aufgrund eines vorbestimmten Schwenkbegrenzungswinkel a (Figur 5) zwischen den Kettengliedern 34 eine bauchige Ausrichtung der Kettenglieder 34 bezüglich der Ebene erzielt. Da an der Oberseite 35 der Kettenglieder 34 ein Führungsabschnitt 43 gebildet ist, der durch den Niederhalter 46 entlang des Spaltes 16 niedergehalten wird, wirkt eine Vorspannung auf die Kettenglieder 34, so dass selbst bei einer längeren Überdeckungsstrecke im Spalt 16 ein Durchhängen des Überdeckungselementes 30, 31 verhindert ist. Durch diese Ausgestaltung des Schwenkwinkels werden entlang der gesamten Länge der Führung 44 die Kettenglieder 34 in einer definierten Position zum Spalt 16 gehalten und schließen diesen.

Am Eingang des Spaltes 16 ist unterhalb des Niederhalters 46 ein Stützpunkt 51 vorgesehen, um eine definierte Einlaufposition der Kettenglieder 34 zur Führung 44 im Spalt 16 zu bilden. Dieser Stützpunkt 51 ist insbesondere dann vorgesehen, wenn das Ende 32 des Überdeckungselementes 30, 31 mittels einer nur schematisch dargestellten Wickelwelle 53 beispielsweise unterhalb oder benachbart zur Werkstückauflagefläche 14, 15 auf und ab gewickelt wird. Dabei kann in Abhängigkeit der von der Wickelwelle 53 aufgenommenen Wicklungen des Überdeckungselementes 30, 31 die Wickelwelle 53 in Z-Richtung und/oder in Y-Richtung verfahren werden, um eine Ausladung des Überdeckungselementes 30, 31 über die Werkstückauflagefläche 14, 15 hinaus zu verringern.

In Figur 4 ist eine perspektivische Ansicht und in Figur 5 eine Seitenansicht eines Kettengliedes 34 beziehungsweise von zwei benachbarten Kettengliedern 34 der Kette 37 dargestellt. Eine Stützummantelung 41 umfasst Seitenwände 55, 56, an deren jeweiligen Enden Gelenke 57, 58 ausgebildet sind. Die Gelenke 57, 58 der Kettenglieder 34 können einen Schwenkwinkel β zwischen zwei benachbarten Kettengliedern 34 begrenzen. Der Schwenkbereich β kann beispielsweise 1° bis 60° umfassen. In einer abgewinkelten Position ist eine Schwenkposition einer Längsachse 59 einer Seitenwand 54 des einen Kettengliedes 34 zur Längsachse 59 der Seitenwand 54 des benachbarten Kettengliedes mit einem Schwenkwinkel β von beispielsweise 1° bis beispielsweise 10°, 20°, 30° oder größer ausgerichtet. In einer nicht geschwenkten Position sind die Kettenglieder 34 durch einen Schwenkbegrenzungswinkel a von beispielsweise 1° zueinander ausgerichtet, so dass die Längsachsen 59 der benachbarten Kettenglieder 34 nicht in einer gemeinsamen Achse liegen. Der Schwenkbegrenzungswinkel a schließt sich in eine Richtung unmittelbar an die Längsachse 59 des Kettengliedes 34 an. In dieselbe Richtung weisend und an den Schwenkbegrenzungswinkel a angrenzend ist der Schwenkwinkel β vorgesehen, der den Schwenkbereich der beiden Kettenglieder zueinander bestimmt und beschränkt. Zwischen den Seitenwänden 55, 56 erstrecken sich Stege 61, 62, durch welche ein Führungskanal 42 in der Stützummantelung 41 gebildet wird. Innerhalb des Führungskanals 42 können Versorgungsleitungen geführt werden. Auf einem den Gehäusedeckel bildenden Steg 61 kann die Bürstenauflage 36 seitlich versetzt aufgebracht werden, so dass ein Führungsabschnitt 43 entlang der Längserstreckung der Kettenglieder 34 verbleibt.

Die einzelnen Kettenglieder 34 sind durch die Stützummantelung 31 in sich torsionssteif ausgebildet. Ebenso sind die Gelenke 57, 58 mit den benachbarten Gelenken 57, 58 der Kettenglieder 34 torsionssteif verbunden. Ein dem Unterstützungsschlitten 24, 25 zugeordnetes Kettenglied 34 ist fest an dem Unterstützungsschlitten 24, 25 befestigt. Insbesondere ist das Kettenglied 34 momentensteif und nicht verdrehbar an dem Unterstützungsschlitten 24, 25 angeordnet. Das gegenüber liegende Ende 32 der Kette 37 ist bezüglich dem letzten Kettenglied 34 ebenfalls momentensteif und nicht verdrehbar an der Wickelwelle 53, einer Führung oder an einem festen Lagerpunkt befestigt.

In Figur 5 ist eine alternative Ausführungsform zu Figur 3 dargestellt, bei der das Ende 32 des Überdeckungselementes 30, 31, welches dem Unterstützungsschlitten 24, 25 gegenüber liegt, fest an einem Lagerpunkt angeordnet ist. Dabei kann der Abstand des festen Endes 32 des Überdeckungselementes 30, 31 zum Niederhalter 46 der Führung 44 durch den maximalen Schwenkwinkel der Kettenglieder 34 zueinander bestimmt werden. Bevorzugt wird dabei dieser Abstand geringfügig kleiner eingestellt als der Schwenkradius der Kette bei einer 180°-Umlenkung, so dass durch den verringerten Abstand eine Vorspannung auf die Kette aufgebaut wird, wodurch eine Abstützung beziehungsweise ein Stützpunkt 51 entfallen kann.

## Patentansprüche

1. Maschine zur trennenden Bearbeitung mit einem Bearbeitungswerkzeug eines plattenförmigen Werkstücks (12), welche zwei Werkstückauflageflächen (14, 15) zur Auflage des Werkstücks (12), zwischen denen ein Spalt (16) gebildet ist, und mindestens einen im oder entlang des Spalts (16) verfahrbaren Schlitten (24, 25) umfasst, der mit mindestens einem Überdeckungselement (30, 31) verbunden ist, das den Spalt (16) zumindest teilweise abdeckt und das eine Kette (37) mit mehreren Kettengliedern (34) umfasst, die zueinander schwenkbar ausgebildet sind, **dadurch gekennzeichnet,**
- **dass** die Kettengliedern (34) auf einer Oberseite (35) eine Bürstenauflage (36) aufweisen, und
- **dass** zumindest zwei zueinander benachbarte Kettenglieder (34) einen Schwenkbegrenzungswinkel (a) gegenüber der Längsachse (59) der Kettenglieder (34) aufweisen, so dass die Kettenglieder (34) bei einer geradlinigen Ausrichtung zueinander ohne Kraftbeaufschlagung einen nicht-ebenen nach oben gewölbten Verlauf einnehmen, und
- **dass** der Schwenkbegrenzungswinkel (a) zwischen zwei benachbarten Kettengliedern (34) gegenüber der Längsachse (59) der Kettenglieder (34) mindestens 1° umfasst, und/oder die Kettenglieder (34) in einem Schwenkwinkel (β) von mindestens 1° bis 60° zueinander schwenkbar sind und der Schwenkwinkel (β) sich ausgehend von der Längsachse (59) an den Schwenkbegrenzungswinkel (a) anschließt.

2. Maschine nach Anspruch 1, **dadurch gekennzeichnet, dass** die Kettenglieder (34) der Kette (37) bei einer geradlinigen Ausrichtung zueinander einen konvexen Verlauf, insbesondere bei einer horizontalen Ausrichtung einen konvexen Verlauf entgegen der Schwerkraftrichtung, einnehmen.

3. Maschine nach einem der vorhergehenden Ansprüche, **dadurch gekennzeichnet, dass** die Bürstenauflage (36) auf dem Kettenglied (34) durch eine mit Bürsten (39) bestückte Platte (38) ausgebildet ist.

4. Maschine nach einem der vorhergehenden Ansprüche, **dadurch gekennzeichnet, dass** eine im oder benachbart zum Spalt (16) angeordnete und in den Spalt (16) weisende Führung (44) vorgesehen ist, durch welche die Kettenglieder (34) geführt sind und die Bürstenauflage (36) des jeweiligen Kettengliedes (34) im Spalt (16) bündig zu den Werkstückauflageflächen (14, 15) ausgerichtet ist.

5. Maschine nach Anspruch 4, **dadurch gekennzeichnet, dass** die Führung (44) zumindest eine Schiene (45) umfasst, welche als Niederhalter (46) für die Kettenglieder (34) im Spalt (16) angeordnet ist und an welcher die Kettenglieder (34) während der Verfahrbewegung des Überdeckungselements (30, 31) anliegen und vorzugsweise die Führung (44) auf der als Niederhalter (46) ausgebildeten Schiene (45) eine Bürstenauflage (49) aufweist.

6. Maschine nach Anspruch 4 bis 5, **dadurch gekennzeichnet, dass** die Führung (44) als eine L-förmige Schiene (45) ausgebildet ist, welche die Kettenglieder (34) mit einem horizontal ausgerichteten Schenkel der L-förmigen Schiene (45) niederhält und seitlich mit einem vertikalen Schenkel der L-förmigen Schiene eine seitliche Führung (47) bildet und/oder dass jeweils am Eingang des Spaltes (16) ein Stützpunkt (51) für die in den Spalt (16) einlaufenden Kettenglieder (34) vorgesehen ist und der Stützpunkt (51) die Kette (37) zur Führung (44) positioniert und/oder dass an der Oberseite (35) der Kettenglieder (34) entlang einer Seitenkante längs der Kette (37) ein Führungsabschnitt (43) ohne Bürstenauflage (36) vorgesehen ist, welcher an der Führung (44) anliegt.

7. Maschine nach einem der vorhergehenden Ansprüche, **dadurch gekennzeichnet, dass** ein Ende (33) des als Kette (37) ausgebildeten Überdeckungselementes (30, 31) im Spalt (16) verfahrbar an dem Schlitten (24, 25) befestigt und das andere Ende (32) der Kette (37) an einer Wickelwelle (53) oder in einer Führung aufrollbar angeordnet ist.

8. Maschine nach einem der vorhergehenden Ansprüche, **dadurch gekennzeichnet, dass** das Überdeckungselement (30, 31) als eine Energieführungskette und ein Gehäusedeckel eines Kettengliedes (34) der Energieführungskette als Bürstenauflage (36) ausgebildet ist.

9. Überdeckungselement für eine Maschine, insbesondere nach einem der vorhergehenden Ansprüche, das aus einer Kette (37) mit mehreren Kettengliedern (34) besteht, wobei die Kette (37) aus mehreren aneinander gereihten und zueinander schwenkbaren Kettengliedern (34) gebildet ist, **dadurch gekennzeichnet,.**
- **dass** die Kettengliedern (34) auf einer Oberseite (35) eine Bürstenauflage (36) aufweisen, und
- **dass** zumindest zwei zueinander benachbarte Kettenglieder (34) einen Schwenkbegrenzungswinkel (a) gegenüber der Längsache (59) der Kettenglieder (34) aufweisen, so dass die Kettenglieder (34) bei einer geradlinigen Ausrichtung zueinander ohne Kraftbeaufschlagung einen nicht-ebenen nach oben gewölbten Verlauf einnehmen und
- **dass** der Schwenkbegrenzungswinkel (a) der zwei zueinander benachbarten Kettenglieder (34) gegenüber der Längsachse (59) der Kettenglieder (34) mindestens 1° umfasst, und/oder die Kettenglieder (34) in einem Schwenkwinkel (β) von 1° bis 60° zueinander schwenkbar sind und der Schwenkwinkel (β) sich ausgehend von der Längsachse (59) des Kettengliedes (34) an den Schwenkbegrenzungswinkel (a) gegenüberliegend anschließt.

10. Überdeckungselement nach Anspruch 9, **dadurch gekennzeichnet, dass** die Kettenglieder (34) der Kette (37) bei einer geradlinigen Ausrichtung zueinander einen konvexen Verlauf, insbesondere bei einer horizontalen Ausrichtung einen konvexen Verlauf entgegen der Schwerkraftrichtung, einnehmen.

11. Überdeckungselement nach einem der Ansprüche 9 oder 10, **dadurch gekennzeichnet, dass** die Kettenglieder (34) torsionssteif ausgebildet sind und die gelenkige Verbindung zwischen den Kettengliedern (34) torsionssteif ist.

12. Überdeckungselement nach einem der Ansprüche 9 bis 11, **dadurch gekennzeichnet, dass** das Überdeckungselement (30, 31) als eine Energieführungskette mit einer Stützummantelung (41) ausgebildet ist, in deren Innerem ein Führungskanal, vorzugsweise zur Aufnahme mindestens einer Leitung, vorgesehen ist, und bei der die als Steg (61) ausgebildeten Gehäusedeckel der Stützummantelung (41) als Bürstenauflage (36) ausgebildet sind oder eine Bürstenauflage (36) aufnehmen.

13. Überdeckungselement nach einem der Ansprüche 9 bis 12, **dadurch gekennzeichnet, dass** die Bürstenauflage (36) aus Bürstenbündeln (39) gebildet ist, die einen der Abstand zueinander von nicht mehr als 40 mm aufweisen.

## Claims

1. A machine for separative machining with a machining tool for a plate-shaped workpiece (12), which has two workpiece support surfaces (14, 15) for supporting the workpiece (12), between which a gap (16) is formed, and comprises at least one movable carriage (24, 25) in or along the gap (16) which is connected to at least one covering element (30, 31) which at least partially covers the gap (16) and which comprises a chain (37) with a plurality of chain links (34) which are designed to be pivotable relative to one another, **characterised in that**
- the chain links (34) have a brush support (36) on an upper side (35), and
- at least two mutually adjacent chain links (34) have a pivot delimitation angle (a) relative to the longitudinal axis (59) of the chain links (34), so that the chain links (34) assume a non-planar, upwardly curved course when they are aligned in a straight line without the application of force, and
- the pivot delimitation angle (a) between two adjacent chain links (34) in relation to the longitudinal axis (59) of the chain links (34) comprises at least 1°, and/or the chain links (34) are pivotable relative to one another at a pivot angle (β) of at least 1° to 60° and the pivot angle (β), starting from the longitudinal axis (59), adjoins the pivot delimitation angle (a).

2. The machine according to Claim 1, **characterised in that** the chain links (34) of the chain (37) assume a convex course when they are aligned in a straight line relative to one another, in particular a convex course counter to the direction of gravity when aligned horizontally.

3. The machine according to one of the preceding claims, **characterised in that** the brush support (36) on the chain link (34) is formed by a plate (38) equipped with brushes (39).

4. The machine according to one of the preceding claims, **characterised in that** a guide (44) which is arranged in or adjacent to the gap (16) and points into the gap (16) is provided, via which the chain links (34) are guided and the brush support (36) of the respective chain link (34) in the gap (16) is aligned flush with the workpiece support surfaces (14, 15).

5. The machine according to Claim 4, **characterised in that** the guide (44) comprises at least one rail (45) which is arranged in the gap (16) as a hold-down device (46) for the chain links (34) and on which the chain links (34) lie during the displacement movement of the covering element (30, 31) and preferably that the guide (44) on the rail (45) designed as a hold-down device (46) has a brush support (49).

6. The machine according to Claims 4 to 5, **characterised in that** the guide (44) is designed as an L-shaped rail (45) which holds down the chain links (34) with a horizontally aligned leg of the L-shaped rail (45) and laterally forms a lateral guide (47) with a vertical leg of the L-shaped rail and/or that a support point (51) for the chain links (34) entering the gap (16) is provided at the entrance to the gap (16) and the support point (51) positions the chain (37) for the guide (44) and/or that a guide section (43) without a brush support (36) is provided on the upper side (35) of the chain links (34) along a side edge along the chain (37), which rests on the guide (44).

7. The machine according to one of the preceding claims, **characterised in that** one end (33) of the covering element (30, 31) designed as a chain (37) is displaceably fastened to the carriage (24, 25) in the gap (16) and the other end (32) of the chain (37) is arranged to be rolled up on a winding shaft (53) or in a guide.

8. The machine according to one of the preceding claims, **characterised in that** the covering element (30, 31) is designed as an energy guiding chain and a housing cover of a chain link (34) of the energy guiding chain is designed as a brush support (36).

9. A covering element for a machine, in particular according to one of the preceding claims, which consists of a chain (37) with a plurality of chain links (34), wherein the chain (37) is formed from a plurality of chain links (34) arranged in a row and pivotable relative to one another, **characterised in that**
- the chain links (34) have a brush support (36) on an upper side (35), and
- at least two mutually adjacent chain links (34) have a pivot delimitation angle (a) relative to the longitudinal axis (59) of the chain links (34), so that the chain links (34) assume a non-planar, upwardly curved course when they are aligned together in a straight line without the application of force, and
- the pivot delimitation angle (a) of the two adjacent chain links (34) in relation to the longitudinal axis (59) of the chain links (34) comprises at least 1°, and/or the chain links (34) are pivotable relative to one another at a pivot angle (β) of 1° to 60° and the pivot angle (β), starting from the longitudinal axis (59) of the chain link (34), oppositely adjoins the pivot delimitation angle (a).

10. The covering element according to Claim 9, **characterised in that** the chain links (34) of the chain (37) assume a convex course when they are aligned in a straight line relative to one another, in particular a convex course counter to the direction of gravity when aligned horizontally.

11. The covering element according to one of Claims 9 or 10, **characterised in that** the chain links (34) are designed torsionally rigid and the articulated connection between the chain links (34) is torsionally rigid.

12. The covering element according to one of Claims 9 to 11, **characterised in that** the covering element (30, 31) is designed as an energy guiding chain with a support casing (41), inside of which a guide channel, preferably for receiving at least one line, is provided, and in which the housing cover of the supporting casing (41), which is designed as a web (61), is designed as a brush support (36) or accommodates a brush support (36).

13. The covering element according to one of Claims 9 to 12, **characterised in that** the brush support (36) is formed from brush bundles (39) which are arranged at a distance of no more than 40 mm from one another.

## Revendications

1. Machine pour l'usinage par découpage comprenant un outil d'usinage pour une pièce à usiner (12) en forme de plaque, qui comprend deux surfaces de support (14, 15) de pièce à usiner pour supporter la pièce à usiner (12), entre lesquelles est formée une fente (16), et au moins un chariot (24, 25) pouvant se déplacer dans ou le long de la fente (16) qui est relié à au moins un élément de recouvrement (30, 31) qui recouvre au moins partiellement la fente (16) et qui comprend une chaîne (37) dotée de plusieurs maillons de chaîne (34) pouvant pivoter les uns par rapport aux autres, **caractérisée en ce que**
- les maillons de chaîne (34) présentent un support de brosses (36) sur un côté supérieur (35), et
- **en ce qu'**au moins deux maillons de chaîne (34) adjacents l'un à l'autre présentent un angle de limitation de pivotement (a) par rapport à l'axe longitudinal (59) des maillons de chaîne (34), de sorte que les maillons de chaîne (34) prennent une forme non plane, courbée vers le haut lorsqu'ils sont alignés les uns par rapport aux autres sans application de force, et
- **en ce que** l'angle de limitation de pivotement (a) entre deux maillons de chaîne (34) adjacents par rapport à l'axe longitudinal (59) des maillons de chaîne (34) est d'au moins 1°, et/ou les maillons de chaîne (34) peuvent pivoter l'un par rapport à l'autre à un angle de pivotement (β) d'au moins 1° à 60° et l'angle de pivotement (β), partant de l'axe longitudinal (59), est dans le prolongement de l'angle de limitation de pivotement (a).

2. Machine selon la revendication 1, **caractérisée en ce que** les maillons de chaîne (34) de la chaîne (37) prennent une forme convexe lorsqu'ils sont alignés les uns par rapport aux autres, en particulier une forme convexe à l'opposé de la direction de la gravité lorsqu'ils sont alignés horizontalement.

3. Machine selon l'une quelconque des revendications précédentes, **caractérisée en ce que** le support de brosses (36) sur le maillon de chaîne (34) est formé par une plaque (38) équipée de brosses (39).

4. Machine selon l'une quelconque des revendications précédentes, **caractérisée en ce qu'**il est prévu un guidage (44) qui est disposé dans ou à côté de la fente (16) et pointe dans la fente (16), à travers laquelle sont guidés les maillons de chaîne (34) et le support de brosses (36) du maillon de chaîne (34) respectif dans la fente (16) est aligné à fleur des surfaces de support (14, 15) de pièce à usiner.

5. Machine selon la revendication 4, **caractérisée en ce que** le guidage (44) comprend au moins un rail (45) qui est disposé dans la fente (16) comme dispositif de maintien (46) pour les maillons de chaîne (34) et sur lequel reposent les maillons de chaîne (34) lors du mouvement de déplacement de l'élément de recouvrement (30, 31) et de préférence, le guidage (44) présente un support de brosses (49) sur le rail (45) réalisé sous forme de dispositif de maintien (46).

6. Machine selon les revendications 4 à 5, **caractérisée en ce que** le guidage (44) est réalisé sous la forme d'un rail (45) en forme de L qui maintient vers le bas les maillons de chaîne (34) avec une branche alignée horizontalement du rail (45) en forme de L et forme latéralement un guidage latéral (47) avec une branche verticale du rail en forme de L et/ou **en ce qu'**un point d'appui (51) pour les maillons de chaîne (34) entrant dans la fente (16) est prévu respectivement à l'entrée de la fente (16) et le point d'appui (51) positionne la chaîne (37) pour le guidage (44) et/ou **en ce que** sur le côté supérieur (35) des maillons de chaîne (34) le long d'un bord latéral tout le long de la chaîne (37) est prévue une section de guidage (43) sans support de brosses (36) qui repose sur le guidage (44).

7. Machine selon l'une quelconque des revendications précédentes, **caractérisée en ce qu'**une extrémité (33) de l'élément de recouvrement (30, 31) réalisé sous forme de chaîne (37) est fixée au chariot (24, 25) de manière à pouvoir se déplacer dans la fente (16) et l'autre extrémité (32) de la chaîne (37) est disposée de manière à s'enrouler sur un arbre d'enroulement (53) ou dans un guidage.

8. Machine selon l'une quelconque des revendications précédentes, **caractérisée en ce que** l'élément de recouvrement (30, 31) est réalisé sous la forme d'une chaîne de transmission d'énergie et d'un couvercle de boîtier d'un maillon de chaîne (34) de la chaîne de transmission d'énergie sous forme de support de brosses (36).

9. Élément de recouvrement pour une machine, en particulier selon l'une quelconque des revendications précédentes, qui est constitué d'une chaîne (37) dotée de plusieurs maillons de chaîne (34), la chaîne (37) étant formée de plusieurs maillons de chaîne (34) disposés en rangée et pouvant pivoter les uns par rapport aux autres, **caractérisé en ce que**
- les maillons de chaîne (34) présentent un support de brosses (36) sur un côté supérieur (35), et
- **en ce qu'**au moins deux maillons de chaîne (34) adjacents l'un à l'autre présentent un angle de limitation de pivotement (a) par rapport à l'axe longitudinal (59) des maillons de chaîne (34), de sorte que les maillons de chaîne (34) prennent une forme non plane, courbée vers le haut lorsqu'ils sont alignés sans application de force et
- **en ce que** l'angle de limitation de pivotement (a) des deux maillons de chaîne (34) adjacents l'un à l'autre par rapport à l'axe longitudinal (59) des maillons de chaîne (34) est d'au moins 1°, et/ou les maillons de chaîne (34) peuvent pivoter l'un par rapport à l'autre à un angle de pivotement (β) de 1° à 60° et l'angle de pivotement (β), partant de l'axe longitudinal (59) du maillon de chaîne (34), est situé dans le prolongement opposé à l'angle limite de pivotement (a).

10. Élément de recouvrement selon la revendication 9, **caractérisé en ce que** les maillons de chaîne (34) de la chaîne (37) prennent une forme convexe lorsqu'ils sont alignés les uns par rapport aux autres, en particulier une forme convexe à l'opposé de la direction de la gravité lorsqu'ils sont alignés horizontalement.

11. Élément de recouvrement selon l'une quelconque des revendications 9 ou 10, **caractérisé en ce que** les maillons de chaîne (34) sont rigides en torsion et la liaison articulée entre les maillons de chaîne (34) est rigide en torsion.

12. Élément de recouvrement selon l'une quelconque des revendications 9 à 11, **caractérisé en ce que** l'élément de recouvrement (30, 31) est réalisé sous la forme d'une chaîne de transmission d'énergie avec une chemise de support (41), à l'intérieur de laquelle est prévu un canal de guidage, de préférence pour recevoir au moins une ligne et dans laquelle les couvercles de boîtier de la chemise de support (41), réalisés sous forme d'éléments de liaison (61), sont réalisés sous forme de support de brosses (36) ou reçoivent un support de brosses (36).

13. Élément de recouvrement selon l'une quelconque des revendications 9 à 12, **caractérisé en ce que** le support de brosses (36) est formé de faisceaux de brosses (39) distants les uns des autres d'au plus 40 mm.
